# EUROPEAN PATENT SPECIFICATION

(11) **EP 2 266 731 B1**
(45) Date of publication and mention of the grant of the patent: **04.11.2015**
(21) Application number: 09731917.2
(22) Date of filing: 17.04.2009
(51) Int. Cl.: B23B 27/22, B23B 27/14

(54) **CUTTING INSERT**
SCHNEIDEEINSATZ
INSERT DE COUPE

(30) Priority: 17.04.2008 JP 2008107981
(43) Date of publication of application: 29.12.2010
(73) Proprietor: Tungaloy Corporation, Iwaki-shi, Fukushima 970-1144 (JP)
(72) Inventor: NISHIDA, Hiroyuki, Fukushima 970-1144 (JP)
(74) Representative: Oppermann, Frank
(86) International application number: PCT/JP2009/057783
(87) International publication number: WO 2009/128540

(56) References cited:
- JP-T- 9 502 396
- JP-U- 4 002 504
- JP-U- 4 092 706
- JP-U- 4 115 509
- JP-U- 62 085 303
- US-A- 4 487 534
- US-A- 5 476 346
- US-A- 5 630 681
- US-A- 5 765 972
- US-B1- 6 217 264
- US-B1- 6 234 726

## Description

### Technical Field

The present invention relates to a cutting insert removably attached to a tool body as an edge portion and used for cutting, and more particularly, to one provided with a breaker projection on a rake face.

### Background Art

As is conventionally known, a throwaway tip comprises a breaker projection that is provided on a rake face near a nose so as to bulge gradually along the bisector of the nose with distance from the nose, in order to fracture chips, which are separated and flowed from a workpiece being cut, into appropriate small pieces (e.g., Jpn. UM Appln. KOKAI Publication No. 3-62707).

### Disclosure of Invention

In one such cutting insert, however, chips may be compressed and crushed or bent, or may adhere to the breaker projection when in contact with the breaker projection if the cutting temperature suddenly rises or the cutting resistance increases during high-feed machining or deep cutting. If chip crush occurs, chips inevitably form a thick block and produce a high load during a cutting operation, thereby causing damage to an edge portion or chatter vibration. If chip adhesion occurs, moreover, the curled shape and discharging direction of chips become unstable, so that the edge portion undergoes fracture or the like due to the chips existing between a workpiece and an insert. Thus, a highly precise finished surface quality cannot be obtained, which shortens the tool lifetime. If the inclination of the breaker projection is reduced or if the breaker projection is separated farther from the nose to avoid this, on the other hand, the chip controlling force during shallow cutting becomes so weak that the breaker projection may not be able to fulfill its function as a breaker.

US 6,234,726 B1 describes a cutting insert according to the preamble of claim 1 comprising a chip body in a form of a polygonal flat plate comprising a rake face provided on the surface of the polygonal chip body, a corner portion provided at a corner of the rake face, cutting edges intersecting the corner portion, and a breaker projection (chip breaker) provided on the rake face near the corner portion.

The chip breaker consists of an annular portion and a rib portion. The rip portion comprises an upper surface and a breaker wall surface. The breaker wall surface consists of a first breaker wall extending toward the corner so as to join with the rake face, and a second breaker wall formed adjacent to the upper surface. In the section taken along the bisector, the first breaker wall protrudes from the rake face in the direction of the upper surface following a convexly curved line, while the second breaker wall protrudes from the first breaker wall in the direction of the upper surface following a straight line.

US 4,487,534 describes a cutting bit of a regular triangular shape comprising chip forming elements having a star-shaped outline. The chip forming elements have a cross section in the form of a circular or semicircle segment with a ground surface.

The present invention has been made in consideration of these circumstances, and its object is to provide a long-life cutting insert configured so that even if the feed rate or depth of cut is changed, stable, high chip disposability can be ensured to obtain a highly precise finished surface quality.

In order to achieve the above object, the present invention provides the following means.

The present invention provides a cutting insert comprising an insert body in the form of a polygonal flat plate, a rake face on at least one polygonal surface of the insert body, a corner portion provided at a corner of the rake face, and at least one pair of cutting edges provided at a side ridge portion of the rake face and crossing the corner portion, the cutting insert characterized in that a breaker projection is provided on the rake face near the corner portion so as to bulge gradually along a bisector of the corner portion with distance from the corner portion, and the breaker projection comprises a front apex portion substantially in the shape of a convex circular arc in a section along the bisector and a side portion which comprises a recess substantially in the shape of a concave circular arc in a section perpendicular to the bisector.

According to the present invention, the breaker projection is provided on the rake face near the corner portion so as to bulge gradually along the bisector of the corner portion with distance from the corner portion. Therefore, chips flowed during a cutting operation are curled and fragmented by hitting the breaker projection and being controlled thereby.

In this case, the front apex portion of the breaker projection is formed substantially in the shape of a convex circular arc in the section along the bisector. Therefore, the area of contact between the front apex portion of the breaker projection and chips is smaller than in the case of a conventional breaker projection that is formed straight. Thus, it is possible to suppress crush or adhesion of chips due to excessive contact with the front apex portion of the breaker projection.

Further, the recess substantially in the shape of a concave circular arc in the section perpendicular to the bisector is formed in the side portion of the breaker projection. If coolant flows into the recess, therefore, adhesion of chips due to contact with the side portion of the breaker projection can be suppressed.

Thus, it is possible to prevent damage to an edge portion and chatter vibration attributable to an increase in load applied during a cutting operation due to chip crush and to prevent chips from entering the region between a workpiece and an insert, breakage of the edge portion, etc., as the curled shape and discharging direction of the chips become unstable due to adhesion of the chips.

Consequently, even if the feed rate or depth of cut is changed so that the points of contact between chips and the breaker projection vary, stable, high chip disposability can be ensured to obtain highly precise finished surface quality and improve the tool lifetime.

In the invention described above, moreover, at least a part of a convex curve defined by the section of the front apex portion along the bisector preferably has a radius of curvature of 2.0 to 20.0 mm. According to this arrangement, chip crush and adhesion can be prevented without reducing the chip controlling force during shallow cutting.

Preferably, moreover, a concave curve defined by the section of the recess perpendicular to the bisector has a radius of curvature of 0.2 to 10.0 mm. According to this arrangement, chip adhesion during deep cutting can be effectively prevented.

In the invention described above, furthermore, the front apex portion may comprise a flat surface substantially straight in a section perpendicular to the bisector. In this case, the flat surface preferably has a width of 0.05 to 0.5 mm perpendicular to the bisector. According to this arrangement, even narrow thin chips that cannot be easily controlled during shallow cutting or low-feed machining can be reliably caught and controlled by the flat surface of the front apex portion of the breaker projection.

In the invention described above, moreover, the cutting edge is inclined downward away from the corner portion in the thickness direction of the insert body. According to this arrangement, a relative height from the cutting edge to an apex portion of the breaker projection increases with distance from the corner portion. Therefore, even a wide thick chip block does not move over the breaker projection during deep cutting or high-feed machining, so that they can be reliably controlled by the side portion of the breaker projection. As the cutting edge is thus inclined, furthermore, the rake face continuous with it is also inclined downward away from the corner portion in the thickness direction of the insert body. Consequently, the chips are guided away from the corner portion of the insert body, so that the chip discharging direction is stabilized.

In the invention described above, furthermore, the rake face may comprise a slope inclined downward away from the side ridge portion in the thickness direction of the insert body. According to this arrangement, the cutting resistance is reduced. Since chips are guided toward the breaker projection, moreover, they can be reliably controlled in contact with the breaker projection.

### Brief Description of Drawings

FIG. 1 is a perspective view showing a cutting insert according to one embodiment of the present invention;
FIG. 2 is a top view of the cutting insert;
FIG. 3 is a partial enlarged view showing a breaker projection of the cutting insert;
FIG. 4A is an enlarged longitudinal sectional view of the cutting insert taken along line A-A of FIG. 2;
FIG. 4B is a view comparatively showing the breaker projection of the cutting insert and a conventional breaker projection;
FIG. 5A is an enlarged longitudinal sectional view of the cutting insert taken along line B-B of FIG. 2; and
FIG. 5B is a view comparatively showing the breaker projection of the cutting insert and the conventional breaker projection.

### Best Mode for Carrying Out the Invention

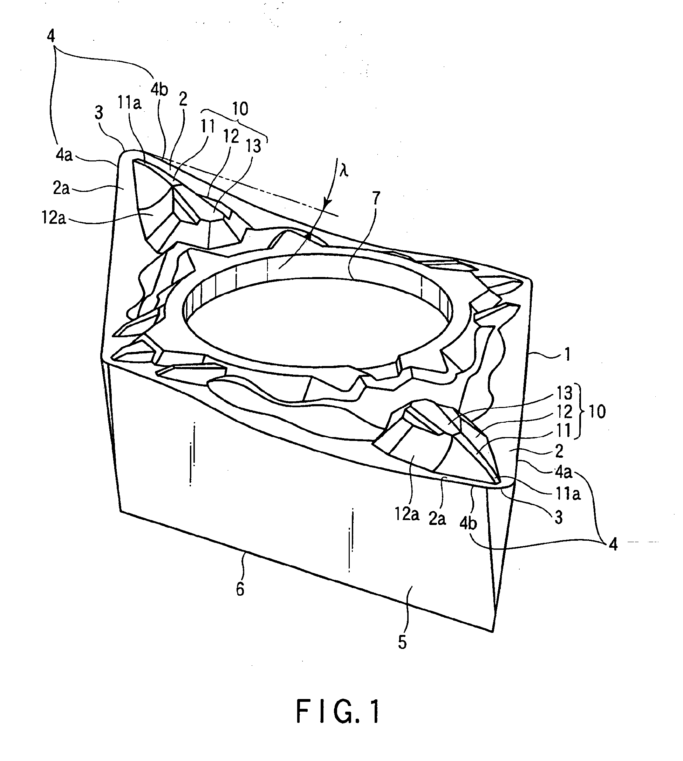

One embodiment of a cutting insert according to the present invention will now be described with reference to FIGS. 1 to 3 and FIGS. 4A, 4B, 5A and 5B.

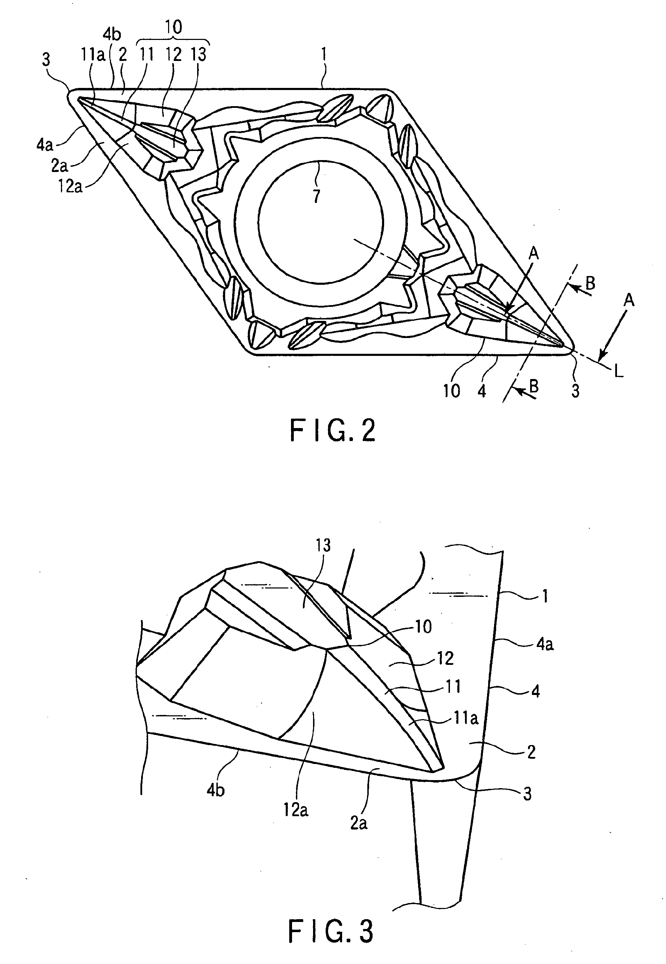

An insert body 1 of the cutting insert according to the present embodiment has an external shape such as the one shown in FIGS. 1 and 2. Further, cemented carbide, cermet, ceramic, sintered diamond, cubic boron nitride (cBN), etc., may be used as the material of the insert body 1. The insert body 1 is in the form of, for example, a substantially rhombic flat plate with a apex angle of 55° when viewed vertically from above. The vertical direction in FIG. 1 is defined as the thickness direction of the insert body 1. Furthermore, the insert body 1 comprises rake faces 2 on its substantially rhombic upper surface, corner portions 3, a pair of cutting edges 4, flank faces 5, a seating surface 6, and a mounting hole 7. The corner portions 3 are provided individually at two acute corners that form the respective apex angles of the rake faces 2. The cutting edges 4 are provided individually at side ridge portions of the rake faces 2 that cross the corner portions 3. The flank faces 5 are arranged individually on side surfaces that cross the rake faces 2. The seating surface 6 is provided on a bottom surface that crosses the flank faces 5. The mounting hole 7 is located in the central portion and penetrates the insert body from top to bottom.

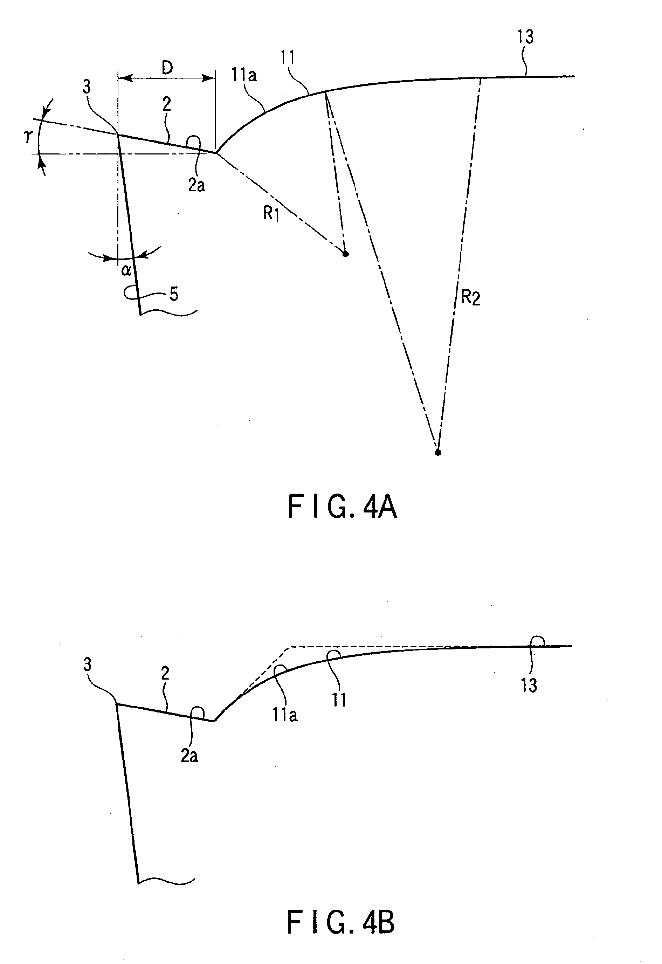

A rake angle γ of, for example, 10° is given to each rake face 2, which comprises a slope 2a that is inclined downward away from the side ridge portions of the insert body 1 in the thickness direction of the insert body 1. For example, the slope 2a is formed so as to be inclined straight in a section perpendicular to the cutting edge 4. Breaker projections 10 are arranged individually near the corner portions 3 on the rake faces 2. Each breaker projection 10 rises upward in the thickness direction of the insert body 1 from the slope 2a and bulges gradually beyond the height of the cutting edge 4 as viewed along a bisector L of the corner portion 3. A distance D from the corner portion 3 to a rise-start point of the breaker projection 10, that is, the end of a front apex portion 11, is set to, for example, 0.5 mm (FIG. 4A).

As shown in FIG. 3, the breaker projection 10 comprises the front apex portion 11 facing the corner portion 3 of the insert body 1, side portions 12 facing the side ridge portions of the insert body 1, and an apex portion 13 extending at right angles to the thickness direction of the insert body 1 from the terminal end of the front apex portion 11.

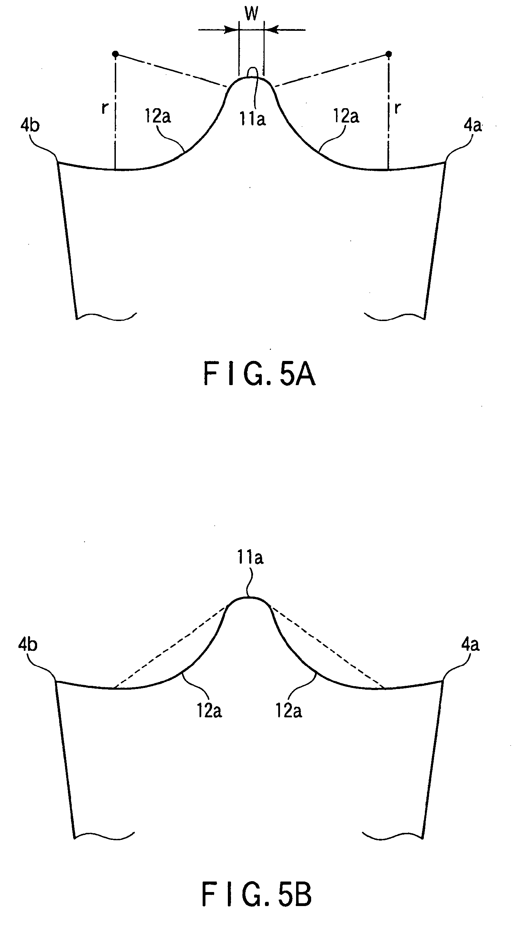

As shown in FIGS. 4A and 5A, the front apex portion 11 comprises a flat surface 11a that is substantially straight in a section perpendicular to the bisector L of the corner portion 3. This flat surface 11a is formed so as to be substantially in the shape of a convex circular arc in a section along the bisector L of the corner portion 3. The radius of curvature R of a convex curve formed by the section along the bisector L of the corner portion 3 of the front apex portion 11 is set, for example, so that the radius of curvature R1 near the corner portion 3 is as small as 0.5 mm and the radius of curvature R2 in a position distant from the corner portion 3 is 5.0 mm, which is larger than the radius of curvature R1. Specifically, the front apex portion 11 is formed so as to rise with a large curvature and high inclination near the corner portion 3 and to bulge with a curvature and inclination that become smaller or lower with distance from the corner portion 3.

Further, width W of the flat surface 11a perpendicular to the bisector L of the corner portion 3 is set to, for example, 0.08 mm. Convex curved surfaces, which are each substantially in the shape of a convex circular arc in a section perpendicular to the bisector L of the corner portion 3, are arranged individually on the opposite ends of the flat surface 11a, in order to smoothen joints with the side portions 12.

As shown in FIG. 5A, the side portions 12 each comprise a recess 12a, which is substantially in the shape of a concave circular arc in a section perpendicular to the bisector L of the corner portion 3 and extends away from the corner portion 3. The respective sectional shapes of the recesses 12a perpendicular to the bisector L extending away from the corner portion 3 are substantially similar to each other, and are formed so as to become deeper with distance from the corner portion 3. The radius of curvature r of a concave curve defined by the respective sections of the recesses 12a perpendicular to the bisector L of the corner portion 3 is set to be constant throughout the recesses 12a. For example, the radius r is 1.0 mm if it is measured halfway between the tip of the front apex portion 11 that adjoins the slope 2a and the terminal end of the front apex portion 11 that adjoins the apex portion 13.

The pair of cutting edges 4 each comprise a major cutting edge 4a and minor cutting edge 4b that adjoin each other with the corner portion 3 between them. Since the pair of cutting edges 4 each comprising the major cutting edge 4a and minor cutting edge 4b are disposed individually at the corner portions 3, 3, two pairs of cutting edges 4, 4 are provided in total.

The major cutting edge (side cutting edge) 4a and minor cutting edge (front cutting edge) 4b, including the corner portion 3, are inclined downward away from the corner portion 3 in the thickness direction of the insert body 1. The cutting edge 4 has its inclination angle λ set to, for example, 8° and is formed so as to be continuous with the corner portion 3 and inclined substantially in a circular arc (see FIG. 1).

A positive clearance angle α of, for example, 7° is given to the flank faces 5, which constitute a positive insert (see FIG. 4A).

The following is a description of the operation of the cutting insert according to the present embodiment constructed in this manner.

The cutting insert according to the present embodiment comprises the breaker projections 10 that bulge gradually along the bisector of the corner portions 3 with distance from the corner portions 3 on the rake surface 2 near the corner portion 3. Thus, the breaker projections 10 function as insert breakers (chip breakers) configured so that chips separated and flowed from a workpiece being cut are caused to hit the breaker projections 10 and be controlled thereby. Thereupon, the chips are curled and fragmented.

Further, the cutting resistance is reduced, since the rake faces 2 that are continuous with the side ridge portions of the insert body 1 comprise the slopes 2a. Since the chips are guided to the breaker projections 10 by the slopes 2a, moreover, they can be reliably controlled in contact with the breaker projections 10.

According to the cutting insert of the present embodiment, in this case, the front apex portion 11 of the breaker projection 10 is formed substantially in the shape of a convex circular arc in a section along the bisector L of the corner portion 3. Therefore, the area of contact between the front apex portion 11 of the breaker projection 10 and chips is smaller than in the case of a conventional breaker projection that is formed straight. Consequently, it is possible to suppress crush or adhesion of chips due to excessive contact with the front apex portion 11 of the breaker projection 10, which may be caused during shallow cutting.

As shown in FIG. 4B, moreover, the front apex portion 11 of the breaker projection 10 is formed so as to rise in a steep slope near the corner portion 3, in order to enhance the chip controlling force during shallow cutting. However, the front apex portion 11 is formed so that its bulging curve becomes gentler with distance from the corner portion 3. Therefore, the height of the front apex portion 11 in the thickness direction of the insert body 1 in a position distant from the corner portion 3 is lower than that of the conventional straight breaker projection, as indicated by a chain line in the drawing. If the feed rate or depth of cut is increased, therefore, crush or adhesion of chips can be suppressed.

As shown in FIG. 5B, moreover, the side portions 12 of the breaker projection 10 are each formed with the recess 12a that is substantially in the shape of a concave circular arc in the section perpendicular to the bisector L of the corner portion 3. If coolant flows into the recess 12a, therefore, its effects, such as lubrication and cooling effects, can be obtained more effectively than in the case of the conventional breaker projection that is not formed with a recess, as indicated by the chain line in the drawing. Consequently, it is possible to suppress adhesion or crush of chips due to contact with the side portion 12 of the breaker projection 10, which may be caused during deep cutting.

Accordingly, it is unlikely that a high resistance will act even if the chips form a thick deformed block at the time of chip crush. In addition, the cutting load is reduced, and damage to edge portions and chatter vibration can therefore be prevented.

Further, the curled shape and discharging direction of the chips cannot be destabilized by adhesion of the chips, so that the chip removability is stabilized. Accordingly, the chips can be prevented from overextending and entering the region between a workpiece and an insert, thereby causing fracture of the edge portions or the like.

Thus, even if the feed rate or depth of cut is changed so that the points of contact between the chips and breaker projections vary, stable, high chip disposability can be ensured to obtain highly precise finished surface roughness, dimensional accuracy, etc., for a long period of time and the tool lifetime is excellent.

According to the present embodiment, moreover, the front apex portion 11 of the breaker projection 10 is caused to bulge substantially in a convex circular arc toward the bisector L of the corner portion 3. Therefore, even if the inclination of the slope near the corner portion 3 is increased to control chips during shallow cutting and the tip of the front apex portion 11 is located very close to the corner portion 3, the height of the front apex portion 11 in a position distant from the corner portion 3 can be suppressed. Thus, chip crush can be prevented during deep cutting or high-feed machining.

In addition, the front apex portion 11 comprises the flat surface 11a that is substantially straight in the section perpendicular to the bisector L of the corner portion 3. Therefore, even narrow thin chips that cannot be easily controlled during shallow cutting or low-feed machining can be reliably caught and controlled by the flat surface 11a that is located very close to the corner portion 3. Since the chips are controlled by the flat surface 11a, moreover, their discharging direction is stable.

Thus, the chip controlling force in a shallow cutting region, that is, a machining region with a small machining allowance, is large, and satisfactory chip disposability can be obtained in finish cutting.

According to the present embodiment, moreover, the major cutting edge 4a, including the corner portion 3, is formed so as to be inclined downward away from the corner portion 3 in the thickness direction of the insert body 1. Therefore, the position of the major cutting edge 4a is lower than in the case where it is formed parallel to the seating surface 6. Thus, a relative position from the major cutting edge 4a to the apex portion 13 of the breaker projection 10 increases with distance from the corner portion 3. Consequently, even a wide thick chip block does not leap over the breaker projection 10 during deep cutting or high-feed machining, so that they can be reliably controlled by the side portions 12 of the breaker projection 10.

For the breaker projection 10 that bulges from the slope 2a continuous with the major cutting edge 4a in the lower position, moreover, the height of each side portion 12 from its bottom portion adjacent to the slope 2a to the apex portion 13 is higher than in the case where the major cutting edge 4a is formed parallel to the seating surface 6. In other words, the area of the side portions 12 of the breaker projection 10 increases with the increase of inclination of the major cutting edge 4a. Thus, the recesses 12a can be formed so as to become larger or deeper with distance from the corner portion 3 without reducing the rigidity of the breaker projection 10. Consequently, even if a wide or thick chip block that contacts the side portions of the breaker projection 10 in positions distant from the corner portion 3 may be produced, the adhesion of such a chip block can be suppressed as the coolant effectively flows into the large deep recesses 12a.

Thus, chip controlling force in a deep cutting region, that is, a machining region with a large machining allowance, is large, and satisfactory chip disposability can be obtained in rough cutting.

According to the present embodiment, moreover, the rake face continuous with the major cutting edge 4a is inclined downward away from the corner portion 3 in the thickness direction of the insert body 1 along the extension of the major cutting edge 4a, accompanying the inclination of the major cutting edge 4a, and also inclined downward away from the side ridge portions of the insert body 1 in the thickness direction of the insert body 1 at right angles to the major cutting edge 4a. In other words, the rake face 2 continuous with the major cutting edge 4a is given a positive rake angle γ, which is obtained by synthesizing the inclination angle A given to the major cutting edge 4a and the rake angle γ given to the rake face 2 continuous with the major cutting edge 4a. Therefore, chips are quickly curled at right angles to the major cutting edge 4a by the slope 2a, which gradually declines along the extension of the major cutting edge 4a and also gradually declines at right angles to the major cutting edge 4a, as they are smoothly guided away from the corner portion 3 and side ridge portions of the insert body. Consequently, the chips are facilitated to be curled sideways and flowed in a fixed direction even in the case they are not fragmented.

Thus, satisfactory chip removability can be obtained with stability even in the case of low-feed machining where chips cannot be easily fragmented.

Thus, the cutting insert according to the present embodiment can also be suitably used in profiling with substantial cutting variations such that machining regions with small and large machining allowances coexist. Further, the present insert can also be suitably used in variations in the feed rate. Accordingly, inserts for rough cutting and finish cutting need not be used in combination, and cutting conditions can be set arbitrarily, so that the machining efficiency is improved. Since the cutting insert according to the present embodiment can be used in both rough machining and finish machining, the number of manufacturing processes and tools which may be required can be decreased, and the manufacturing costs can be reduced, accordingly.

In the present embodiment, furthermore, the radius of curvature R1 near the corner portion 3 at the front apex portion 11 of each breaker projection 10 is as small as 0.5 mm, and the radius of curvature R2 in the position distant from the corner portion 3 is 5.0 mm, which is larger than the radius of curvature R1. However, the radius of curvature R of the front apex portion 11 is not limited to this, and any other desired radius of curvature R may be used instead. Further, the same radius of curvature R may be used for the entire front apex portion 11 without being varied between the region near the corner portion 3 and the other parts. Preferably, the radius of curvature R of the front apex portion 11 should be set within the range of 2.0 to 20.0 mm. If the radius of curvature R of the front apex portion 11 is less than 2.0 mm, the slope is so steep that the front apex portion 11 is inevitably too high in a position near the corner portion 3, so that chip crush may not be able to be prevented during deep cutting. If the radius of curvature R of the front apex portion 11 is more than 20.0 mm, on the other hand, the curve is so gentle or similar to a straight line that the area of contact between the front apex portion 11 and chips cannot be reduced, and chip crush may not be able to be prevented during shallow cutting.

Although the front apex portion 11 of the breaker projection 10 comprises the flat surface 11a in the present embodiment, moreover, it may alternatively comprise a convex curved surface substantially in the shape of a convex circular arc in a section perpendicular to the bisector L of the corner portion 3. Further, the front apex portion 11 may comprise a combination of flat and convex curved surfaces.

Although width W of the flat surface 11a is 0.08 mm in the present embodiment, furthermore, it may alternatively be set to any other desired width. Preferably, width W of the flat surface 11a should be set within the range of 0.05 to 0.5 mm. This is because narrow thin chips may not be able to be fully controlled during shallow cutting or low-feed machining if width W is less than 0.05 mm. If width W is more than 0.5 mm, the area of contact with chips is so large that an adhesion-inhibitory effect may be spoiled.

In the present embodiment, moreover, the radius of curvature r of the recess 12a of the breaker projection 10 is 1.0 mm. However, the radius of curvature r of the recess 12a is not limited to this, and any other desired radius of curvature r may be used. Preferably, the radius of curvature r of the recess 12a should be set within the range of 0.2 to 10.0 mm. This is because the recess is so deep that the rigidity of the breaker projection 11 may be degraded if the radius of curvature r is less than 0.2 mm. If the radius of curvature r is more than 10.0 mm, the recess is too shallow to reliably obtain satisfactory effects, such as lubrication and cooling effects that are produced as the coolant flows into it.

In the present embodiment, furthermore, the same radius of curvature r is given to the entire recess 12a that extends away from the corner portion 3, and the recess is formed so as to become deeper with distance from the corner portion 3. Alternatively, however, the radius of curvature r of the recess 12a may be changed so as to become larger with distance from the corner portion 3 and that the recess becomes shallower with distance from the corner portion 3.

Although both the major cutting edge 4a and the minor cutting edge 4b, including the corner portion 3, are inclined substantially in the shape of a circular arc at the same angle λ so as to be symmetrical with each other in the present embodiment, moreover, the cutting edge 4 is not limited to this shape. For example, the corner portion 3 and major cutting edge 4a may be inclined individually at different angles λ, or the edge strength may be improved by making the angle of the corner portion 3 smaller than that of the major cutting edge 4a. In order to improve the edge strength, furthermore, the corner portion 3 may be formed parallel to the seating surface 6. For the same reason, moreover, the corner portion 3 may be inclined in a straight line in place of a circular arc.

Although the inclination angle λ of the cutting edge 4 is 8° in the present embodiment, moreover, any other desired inclination angle λ may be used instead. In order to improve the chip removability, the inclination angle λ should preferably be set within the range of 5 to 20°. This is because if the angle λ is less than 5°, the effect of facilitating chips to be curled sideways is too small to improve the removability. If the angle λ is more than 20°, the edge strength is reduced so that an edge portion may be broken during deep cutting or high-feed machining.

Although the rake angle γ of 10° is given to each rake face 2, which comprises the slope 2a that is inclined straight, in the present embodiment, furthermore, the rake face 2 is not limited to this structure. Alternatively, for example, the slope 2a may be inclined substantially in a circular arc, and in this case, its synergistic effect with the recess 12a facilitates the effects including the lubrication and cooling effects that are produced as the coolant flows into the recess. Further, a flat surface that extends at right angles to the thickness direction of the insert body 1 from the slope 2a may be provided on the rake face 2 between the slope 2a and breaker projection 10, and the breaker projection 10 may be formed so as to rise upward relative to the thickness of the insert body 1 from the flat surface and bulge gradually along the bisector L of the corner portion 3.

Although the rake angle γ is 10° in the present embodiment, moreover, any other desired rake angle γ may be used instead. Preferably, the rake angle γ should be set within the range of 3 to 20°. This is because the cutting resistance may not be able to be reduced if the angle γ is less than 3°. If the angle γ is more than 20°, the strength of the cutting edge 4 may not be able to be maintained.

Although the clearance angle α is 7° in the present embodiment, moreover, any other desired clearance angle α may be used instead. Further, the positive insert may be replaced with a negative insert. In the case of the negative insert, the insert body 1 is used inside out, so that the apex portion 13 of the breaker projection 10 comprises a flat surface parallel to the seating surface 6, which serves for improved mounting statability.

Although the insert body 1 is a substantially rhombic flat plate in the present embodiment, furthermore, it may alternatively be of any other desired shape, such as a triangular, quadrangular, or hexagonal shape.

It is to be understood that the present invention is not limited to the embodiment described above and may be variously modified without departing from the scope of the claims.

### Industrial Applicability

According to the present invention, an effect is produced such that even if the feed rate or depth of cut is changed, stable, high chip disposability can be ensured to obtain a highly precise finished surface quality and long tool lifetime.

## Claims

1. A cutting insert comprising:
an insert body (1) in a form of a polygonal flat plate, a rake face (2) provided on at least one polygonal surface of the insert body (1), a corner portion (3) provided at a corner of the rake face (2), and at least one pair of cutting edges (4a and 4b) provided at a side ridge portion of the rake face (2) and crossing the corner portion (3), and
a breaker projection (10) provided on the rake face (2) near the corner portion (3) so as to bulge gradually along a bisector (L) of the corner portion with distance from the corner portion,
the breaker projection (10) comprising a front apex portion (11) substantially in the shape of a convex circular arc in a section along the bisector (L), and a side portion (12) having a recess (12a) substantially in the shape of a concave circular arc in a section perpendicular to the bisector (L),
**characterized in that**
the cutting edge (4a and 4b) is inclined downward away from the corner portion (3) in a thickness direction of the insert body (1).

2. The cutting insert according to claim 1, **characterized in that** the rake face (2) comprises a slope (2a) inclined downward away from the side ridge portion in a thickness direction of the insert body (1).

3. The cutting insert according to claim 1 or 2, **characterized in that** the breaker projection (10) comprises an apex portion (13) adjoining the terminal end of the front apex portion (11), the front apex portion (11) of the breaker projection (10) as a whole is formed so as to rise with a larger curvature and higher inclination near the corner portion (3), and so as to bulge with the curvature becoming smaller and the inclination becoming lower with increasing desistance from the corner portion (3).

4. The cutting insert according to one of claims 1 to 3, **characterized in that** at least a part of a convex curve defined by the section of the front apex portion (11) along the bisector (L) has a radius of curvature of 2.0 to 20,0 mm.

5. The cutting insert according to one of claims 1 to 4, **characterized in that** a concave curve defined by the section of the recess (12a) perpendicular to the bisector (L) has a radius of curvature of 0.2 to 10.0 mm.

6. The cutting insert according to any one of claims 1 to 5, **characterized in that** the front apex portion (11) comprises a flat surface substantially straight in a section perpendicular to the bisector (L).

7. The cutting insert according to claim 6, **characterized in that** the flat surface has a width of 0.05 to 0.5 mm perpendicular to the bisector (L).

## Patentansprüche

1. Ein Schneideeinsatz aufweisend:
ein Einsatzkörper (1) in Form einer polygonalen flachen Platte, eine Spanfläche (2), die auf wenigstens einer polygonalen Oberfläche des Einsatzkörpers (1) vorgesehen ist, ein Eckstück (3), das an einer Ecke der Spanfläche (2) vorgesehen ist, und wenigstens ein Paar von Schneidkanten (4a und 4b), die an einem Seitenkantenabschnitt der Spanfläche (2) vorgesehen sind und das Eckstück (3) schneiden, und
ein Brechervorsprung (10), der an der Spanfläche (2) nahe dem Eckstück (3) derart vorgesehen ist, dass sich dieser entlang einer Halbierungslinie (L) des Eckstücks mit zunehmendem Abstand von dem Eckstück fortschreitend nach außen wölbt,
wobei der Brechervorsprung (10) ein vorderes Spitzenteil (11) aufweist, das im Wesentlichen die Form eines konvexen Kreisbogens in einer Sektion entlang der Halbierungslinie (L) hat, und einen Seitenabschnitt (12) aufweist, der eine Aussparung (12a) hat, die im Wesentlichen die Form eines konkaven Kreisbogens in einer Sektion rechtwinklig zu der Halbierungslinie (L) hat,
**dadurch gekennzeichnet, dass**
die Schneidkante (4a und 4b) nach unten weg von dem Eckstück (3) in einer Dickenrichtung des Einsatzkörpers (1) geneigt ist.

2. Der Schneideeinsatz nach Anspruch 1, **dadurch gekennzeichnet, dass** die Spanfläche (2) eine Schrägfläche (2a) aufweist, die nach unten weg von dem Seitenkantenabschnitt in einer Dickenrichtung des Einsatzkörpers (1) geneigt ist.

3. Der Schneideeinsatz nach Anspruch 1 oder 2, **dadurch gekennzeichnet, dass** der Brechervorsprung (10) ein Spitzenteil (3) aufweist, das an das endständige Ende des vorderen Spitzenteils (11) angrenzt, wobei das vordere Spitzenteil (1) des Brechervorsprungs (10) als Ganzes derart geformt ist, dass dieses mit einer größeren Krümmung und einer größeren Steigung nahe des Endstücks (3) ansteigt, und sich mit einer Krümmung nach oben erstreckt, die mit zunehmendem Abstand von dem Endstück (3) kleiner wird, und die Steigung mit zunehmendem Abstand von dem Endstück (3) kleiner wird.

4. Der Schneideeinsatz nach einem der Ansprüche 1 bis 3, **dadurch gekennzeichnet, dass** wenigstens ein Teil einer konvexen Kurve, die durch die Sektion des vorderen Spitzenteils (11) entlang der Halbierungslinie (L) definiert ist, einen Krümmungsradius von 2,0 bis 20,0 mm hat.

5. Der Schneideeinsatz nach einem der Ansprüche 1 bis 4, **dadurch gekennzeichnet, dass** eine konkave Kurve, die durch die Sektion der Ausnehmung (12a) rechtwinklig zu der Halbierungslinie (L) definiert ist, einen Krümmungsradius von 0,2 bis 10,0 mm hat.

6. Der Schneideeinsatz nach einem der Ansprüche 1 bis 5, **dadurch gekennzeichnet, dass** der vordere Spitzenteil (11) eine flache Oberfläche im Wesentlichen gerade in einer Sektion rechtwinklig zu der Halbierungslinie (L) aufweist.

7. Der Schneideeinsatz nach Anspruch 6, **dadurch gekennzeichnet, dass** die flache Oberfläche eine Breite von 0,05 bis 0,5 mm rechtwinklig zu der Halbierungslinie (L) hat.

## Revendications

1. Insert de coupe comprenant :
un corps d'insert (1) sous une forme de plaque plane polygonale, une face de coupe (2) prévue sur au moins une surface polygonale du corps d'insert (1), une partie d'angle (3) prévue au niveau d'un angle de la face de coupe (2), et au moins une paire de bords de coupe (4a et 4b) prévus au niveau d'une partie de nervure latérale de la face de coupe (2) et traversant la partie d'angle (3), et
une projection de marteau (10) prévue sur la face de coupe (2) à proximité de la partie d'angle (3) de sorte à gonfler progressivement le long d'une bissectrice (L) de la partie d'angle à distance de la partie d'angle,
la projection de marteau (10) comprenant une première partie de sommet (11) sensiblement sous la forme d'un arc circulaire convexe dans une section le long de la bissectrice (L), et une partie latérale (12) ayant un renfoncement (12a) sensiblement sous la forme d'un arc circulaire concave dans une section perpendiculaire à la bissectrice (L),
**caractérisé en ce que**
le bord de coupe (4a et 4b) est incliné vers le bas à partir de la partie d'angle (3) dans la direction de l'épaisseur du corps d'insert (1).

2. Insert de coupe selon la revendication 1, **caractérisé en ce que** la face de coupe (2) comprend une pente (2a) inclinée vers le bas à partir de la partie de nervure latérale dans la direction de l'épaisseur du corps d'insert (1).

3. Insert de coupe selon la revendication 1 ou 2, **caractérisé en ce que** la projection de marteau (10) comprend une partie de sommet (13) jouxtant l'extrémité terminale de la partie de sommet avant (11), la partie de sommet avant (11) de la projection de marteau (10) dans son ensemble est formée de sorte à augmenter selon une courbure plus grande et une inclinaison plus élevée à proximité de la partie d'angle (3), et de sorte à gonfler avec la courbure devenant plus petite et l'inclinaison devenant plus faible avec une résistance croissante à partir de la partie d'angle (3).

4. Insert de coupe selon l'une quelconque des revendications 1 à 3, **caractérisé en ce qu'**au moins une partie d'une courbe convexe définie par la section de la partie de sommet avant (11) le long de la bissectrice (L) a un rayon de courbure de 2,0 à 20,0 mm.

5. Insert de coupe selon l'une quelconque des revendications 1 à 4, **caractérisé en ce qu'**une courbe concave définie par la section du renfoncement (12a) perpendiculaire à la bissectrice (L) a un rayon de courbure de 0,2 à 10,0 mm.

6. Insert de coupe selon l'une quelconque des revendications 1 à 5, **caractérisé en ce que** la partie de sommet avant (11) comprend une surface plane sensiblement droite dans une section perpendiculaire à la bissectrice (L).

7. Insert de coupe selon la revendication 6, **caractérisé en ce que** la surface plane a une largeur de 0,05 à 0,5 mm perpendiculaire à la bissectrice (L).
